# EUROPÄISCHE PATENTSCHRIFT

(11) **EP 0 565 957 B1**
(45) Veröffentlichungstag und Bekanntmachung des Hinweises auf die Patenterteilung: **15.11.1995**
(21) Anmeldenummer: 93105382.1
(22) Anmeldetag: 01.04.1993
(51) Int. Cl.: F16L 47/00

(54) **Übergangsverbinder für eine Rohrleitung**
Connection piece for a pipe
Pièce de connexion pour un conduit

(30) Priorität: 11.04.1992 DE 4212278
(43) Veröffentlichungstag der Anmeldung: 20.10.1993
(73) Patentinhaber: FRIATEC AG KERAMIK- UND KUNSTSTOFFWERKE, D-68229 Mannheim (DE)
(72) Erfinder: Bläss, Jürgen, W-6806 Heddesheim (DE)
(74) Vertreter: Klose, Hans, Dipl.-Phys.

(56) Entgegenhaltungen:
- EP-A- 0 414 242
- WO-A-91/18733
- DE-A- 3 707 341
- DE-U- 1 762 814
- DE-U- 8 715 078
- US-A- 2 187 217

## Beschreibung

Die Erfindung bezieht sich auf einen Übergangsverbinder für eine Rohrleitung gemäß den im Oberbegriff des Patentanspruchs 1 angegebenen Merkmalen.

Ein derartiger Übergangsverbinder ist aus der DE 33 23 379 A1 bekannt und enthält einen als Muffe ausgebildeten und aus Metall bestehenden Grundkörper, welcher von einem Kunststoffteil umgeben ist. Der Grundkörper besitzt ein Innengewinde, in welches ein zu verbindendes Metallrohrstück einschraubbar ist. Bei der Herstellung wird der Grundkörper, welcher auf seiner Außenfläche ringförmige Rillen aufweist, vom Kunststoff des zu fertigenden Kunststoffteiles umspritzt. Der Aufwand für derartige Werkzeuge ist nicht unerheblich und es sind besondere Maßnahmen erforderlich, um eine funktionssichere Abdichtung im Übergangsbereich zwischen Metall und Kunststoff zu erzielen. Hierfür weist das in den Grundkörper einzuschraubende Metallrohrstück Ringnuten zur Aufnahme von Dichtringen auf. Korrespondierend zu diesen Dichtringen enthält das Kunststoffteil zylindrische Innenflächen, an welchen die genannten Dichtringe nach dem Einschrauben des Metallrohrstückes anliegen. Das Metallrohrstück muß somit in besonderer Weise ausgebildet sein und der Anschluß von üblichen Metallrohrstücken ist nicht möglich. Beim Einschrauben des Metallrohrstückes besteht zudem die Gefahr, daß die Dichtringe nicht ordnungsgemäß an den zugeordneten Dichtflächen des Kunststoffteiles anliegen oder gar bei unsachgemäßer Montage gänzlich vergessen werden, wodurch erhebliche Risiken hinsichtlich der Funktionssicherheit gegeben sind.

Aus der CH-A 506 015 ist weiterhin ein Übergangsverbinder bekannt, in dessen Metall-Grundkörper ein Kunststoffring eingesetzt ist. Der Grundkörper enthält einen über das vordere Ende des Kunststoffringes hinausragenden Rand, welcher durch Umbördelung zur axialen Festlegung des Kunststoffringes dient. Eine Drehsicherung des Kunststoffringes bezüglich des Metall-Grundkörpers ist nicht vorhanden. Die axiale Sicherung des Kunststoffringes im Metall-Grundkörper erfolgt lediglich durch eine vergleichsweise kleine Ringfläche des umbördelten Randes, wodurch der axialen Belastbarkeit, sei es infolge von äußeren Zugspannungen oder durch innere vom Medium übertragene Druckstöße, Grenzen gesetzt sind.

Ferner ist aus dem DE-U-17 62 814 eine Kunsttoffmuffe zum Verbinden von Metallarmaturen mit Kunststoffrohren in Klebeverfahren bekannt. Die Kunststoffmuffe ist wiederum vollständig in einen Metall-Grundkörper eingesetzt. Der Grundkörper weist ein Feingewinde auf, in welches die Kunststoffmuffe mittels eines entsprechenden und an ihrer Außenfläche angeordneten Feingewinde eingeschraubt ist. Eine Drehsicherung ist nicht vorhanden und des weiteren muß die Abdichtung ausschließlich über die Gewindeverbindung erfolgen. Mit einer derartigen Kunststoffmuffe lassen sich nur vergleichsweise geringe Drücke des durchströmenden Mediums beherrschen und den heutigen hohen Sicherheitsanforderungen hinsichtlich Dichtheit und Lebensdauer wird nicht entsprochen.

Der Erfindung liegt daher die Aufgabe zugrunde, den Übergangsverbinder der genannten Art dahingehend weiterzubilden, daß bei funktionssicherer Konstruktion die Dichtheit zuverlässig gewährleistet wird. Es soll mit geringem Aufwand den Sicherheitsanforderungen hinsichtlich Gasdichtheit und/oder Flüssigkeitsdichtheit entsprochen werden, wobei reproduzierbare und auch bei Fertigung in hohen Stückzahlen zuverlässig erreichbare Verhältnisse vorgegeben werden sollen. Der Übergangsverbinder soll selbst hohe Temperaturänderungen aufnehmen können und unter Berücksichtigung der in der Praxis eintretenden Kräfte mit hoher Zuverlässigkeit die Abdichtung im Übergangsbereich zwischen Metallrohren und Kunststoffrohren sicherstellen.

Die Lösung dieser Aufgabe erfolgt gemäß den im kennzeichnenden Teil des Patentanspruchs 1 angegebenen Merkmalen.

Der vorgeschlagene Übergangsverbinder zeichnet sich durch eine kompakte und funktionssichere Konstruktion aus. Der aus Metall bestehende Grundkörper enthält ein genormtes Gewinde, insbesondere nach DIN 2999, zum Anschließen von Armaturen oder bestehenden Rohrleitungen aus Metall mit genormten Gewinden. Anstelle des genormten Gewindes können ein Bajonett-Verschluß, ein Flanschring oder andere Verbindungselemente vorgesehen sein. Der Grundkörper umgibt teilweise das eingeschraubte Kunststoffteil, wobei das genannte Gewinde bedarfsweise als Innen- oder Außengewinde ausgebildet ist. Der aus Metall bestehende Grundkörper bildet eine Ummantelung und Schutzhülse des Kunststoffteils, dessen Kunststoff auch bei erhöhter Temperatur und/oder erhöhtem Druck nicht radial nach außen fließen kann. Wesentlich ist insoweit, daß sowohl der Dichtbereich mit einem Dichtring als auch der Verbindungsbereich mit den ineinandergreifenden Gewinden von dem die Stützhülse bildenden Grundkörper umgeben sind. Von Bedeutung ist ferner die Anordnung des Dichtringes in Druckrichtung vom Innenraum zum Außenraum vor der Gewindeverbindung. Der Dichtring ist der Gewindeverbindung vorgeschaltet, welche folglich nicht vom Medium veraufschlagt oder gar infolge Korrosion oder chemischen Prozessen angegriffen und gelöst werden kann; für die Gewindeverbindung ist folglich eine lange Lebensdauer erreicht. Besonders wichtig ist ferner die Anordnung des Dichtringes in einer Ringnut des metallischen Grundkörpers. Die Ringnut kann in den aus Metall bestehenden Grundkörper ohne besonderen Fertigungsaufwand mit hoher Präzision in die Innenfläche des Grundkörpers eingebracht werden und unterliegt auch bei höheren Temperaturen oder einwirkenden Drücken des Mediums praktisch keiner Formveränderung, so daß dauerhaft die Dichtheit gewährleistet wird. Würde die Ringnut im Kunststoff angeordnet sein, so wäre vor allem durch Temperatureinflüsse eine Veränderung der Ringnutgeometrie nicht auszuschließen und letztendlich die Abdichtung infrage gestellt.

Der Grundkörper kann ferner als gerades Teil oder als gebogenes Teil, insbesondere in Form einer Wandscheibe zur Befestigung an einer Wand, ausgebildet sein. Der Grundkörper weist Mittel zur Befestigung oder zum Ansetzen eines Werkzeuges auf, so daß beim Einschrauben eines Metallrohres oder einer Armatur in das genannte Gewinde Kräfte vom Kunststoffteil und/oder der angeschlossenen Kunststoffrohrleitung weitgehend ferngehalten werden. Das Kunststoffteil ist außerhalb des Grundkörpers mit einer Verbindungsfläche zum Anschluß von Kunststoffrohren versehen, insbesondere durch Kleben oder Schweißen. Zweckmäßig ist sowohl die Außenfläche als auch die Innenfläche des Kunststoffteils jeweils als Verbindungsfläche ausgebildet, um wahlweise innen oder außen den Anschluß eines Kunststoffrohres zu ermöglichen, so daß für die verschiedenen Einsatzzwecke immer der gleiche Übergangsverbinder zum Einsatz gelangen kann. Das Kunststoffteil ist in besonders zweckmäßiger Weise über eine Gewindeverbindung in den aus Metall bestehenden Grundkörper eingeschraubt. Diese Gewindeverbindung wird werksseitig hergestellt, wobei vor der Montage auf das Gewinde des Kunststoffteils Klebstoff aufgebracht wird.

Der Übergangsverbinder ist in besonders zweckmäßiger Weise als vorgefertigtes komplettes Bauteil ausgebildet, wobei der Klebstoff als Verdrehsicherung dient und ferner eine unzulässige Demontage durch einen Anwender verhindert. Beim Einschrauben oder einem eventuellen Herausschrauben der Metallrohrleitung oder Armatur in bzw. aus den Innengewinde des metallischen Grundkörpers wird die Gewindeverbindung zwischen dem Kunststoffteil und dem Grundkörper nicht belastet, so daß auch insoweit keine Gefährdung der Funktionssicherheit zu befürchten ist. Schließlich dient der Dichtring, welcher insbesondere als bekannter O-Ring ausgebildet ist, zuverlässig zur Abdichtung zwischen dem Grundkörper und dem Kunststoffteil. Bevorzugt ist nur ein einziger Dichtring vorgesehen, welcher im Inneren des Grundkörpers bevorzugt in einer Ringnut angeordnet ist und an einer zugeordneten Dichtfläche des Kunststoffteiles anliegt. Die mit dem Übergangsverbinder hergestellte Verbindung ist aufgrund des genannten Klebstoffes als unlösbare Verbindung zu bezeichnen, welche unter üblichen Arbeits- und Einsatzbedingungen zerstörungsfrei nicht zu lösen ist und somit problemlos auch unter Putz eingesetzt werden kann. In besonders effektiver Weise werden mittels des Dichtringes sowohl die Gewinde- als auch die Klebeverbidung vom Medium getrennt. Da der Grundkörper nicht in das Kunststoffteil eingespritzt wird, bestehen auch keine fertigungstechnischen Grenzen hinsichtlich der Größe des Übergangsverbinders; selbst für große Rohrdurchmesser wird kein besonderer Fertigungsaufwand erforderlich. Der Übergangsverbinder ist somit unbegrenzt anwendbar und ausbildbar, wobei für große Abmessungen ebenso wie für kleine Rohrabmessungen immer die gleichen Lösungsprinzipien realisiert sind.

Der Grundkörper umgibt in zweckmäßiger Weise das Kunststoffteil nur über einen Teil seiner gesamten Länge, und zwar bevorzugt im wesentlichen über die Hälfte der axialen Länge des Kunsttoffteils. Aufgrund dieser besonderen Ausgestaltung liegt die Verbindungsfläche für das Kunststoffrohr in der einen Hälfte des Kunststoffteils, während die Gewindeverbindung in der anderen Hälfte des Kunststoffteiles angeordnet sind. Erfindungsgemäß liegen einerseits die Verbindungsfläche und andererseits die Gewindeverbindung und der Dichtring axial versetzt zueinander. Hierdurch wird in besonders zweckmäßiger Weise der maximale Außendurchmesser des Übergangsverbinders kleingehalten. Die Ringnut für den Dichtring und das Innengewinde des Rundkörpers erfordern einen entsprechenden radialen Durchmesser und aufgrund der axial versetzten Anordnung zu der bzw. den Verbindungsflächen können sowohl der Grundkörper als auch das Kunststoffteil mit vergleichsweise geringen Wandstärken ausgebildet werden. In der Mitte der Längserstreckung des Kunststoffteiles befindet sich in besonders zweckmäßiger Weise ein radial nach außen vorstehender Ringbund, durch welchen eine Aussteifung und Stabilisierung des Kunststoffteiles erfolgt. In zweckmäßiger Weise weist dieser Ringbund ferner eine Anlagefläche auf, an welcher der Grundkörper mit einer Endfläche anliegt. Hierdurch wird in einfacher Weise die Kontrolle der vollständigen und ordnungsgemäßen Verschraubung des Kunststoffteils mit dem Grundkörper ermöglicht. Des weiteren dient Klebstoff, welcher zwischen der Endfläche des Grundkörpers und der genannten Anlagefläche heraustritt und dort erhärtet, in einfacher Weise der Kontrolle gegen ein unbeabsichtigtes Auftrennen der Gewinde- und Klebeverbindung.

Besondere Weiterbildungen und Ausgestaltungen der Erfindung sind in den Unteransprüchen angegeben und werden nachfolgend im einzelnen beschrieben.

Die Erfindung wird nachfolgend anhand der besonderen und in der Zeichnung dargestellten Ausführungsbeispiele näher erläutert. Es zeigen:
- Fig. 1: eine Ausführungsform teilweise in seitlicher Ansicht und teilweise geschnitten,
- Fig. 2: eine zweite Ausführungsform ähnlich Fig. 1, jedoch für kleinere Abmessungen,
- Fig. 3: eine dritte Ausführungsform, deren Grundkörper als Wandscheibe ausgebildet ist.

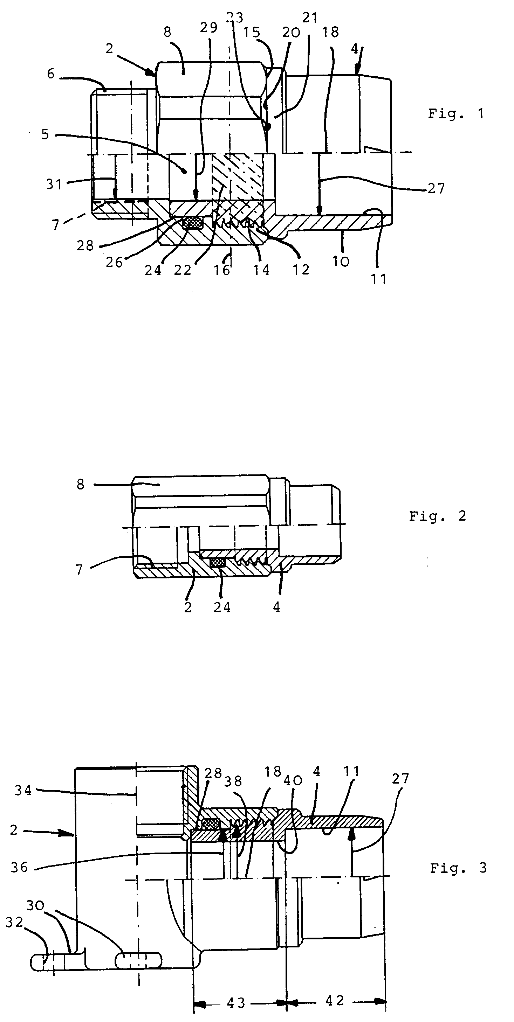

Fig. 1 zeigt den Übergangsverbinder mit einem Grundkörper 2 und einem Kunststoffteil 4 teilweise in einer Ansicht und teilweise in einem axialen Längsschnitt, wobei ein von einem Medium durchströmbarer Innenraum 5 vorhanden ist. Der Grundkörper besteht aus Metall und weist an seinem einen Ende ein Gewinde 6 zum Anschluß einer Armatur oder Rohrleitung aus Metall auf. Das Gewinde 6 ist für diese Ausführungsform ein Außengewinde. Es ist als ein genormtes Gewinde, insbesondere nach DIN 2999, ausgebildet, um so in gewohnter Weise den Anschluß bzw. die Verbindung mit einer Armatur oder einer metallischen Rohrleitung beispielsweise aus Kupfer oder Stahl zu ermöglichen. Ferner kann zusätzlich oder alternativ ein Innengewinde 7 vorgesehen sein. Anstelle der genormten Gewinde 6, 7 können in alternativen Ausführungsformen der Erfindung auch andere Verbindungselemente wie Bajonett-Verschlüsse, Flanschringe oder dergleichen vorgesehen sein.

Der Grundkörper 2 weist außen ferner Mittel 8 zum Ansetzen eines Werkzeuges auf, wobei diese Mittel 8 hier als Sechskantflächen zum Ansetzen eines entsprechenden Sechskantschlüssels ausgebildet sind. Der Grundkörper 2 kann somit zum Anschrauben einer Armatur oder einer Rohrleitung festgehalten werden, ohne daß hierbei Kräfte auf das Kunststoffteil 4 und/oder die hieran über eine äußere bzw. innere Verbindungsfläche 10 bzw. 11 angeschlossene Kunststoffleitung übertragen werden. Der Anschluß der Kunststoffleitung ist wahlweise an der radial außenliegenden Verbindungsfläche 10 oder der radial innenliegenden Verbindungsfläche 11 möglich, wodurch in besonders zweckmäßiger Weise dem jeweiligen Anwendungsfall Rechnung getragen wird und der Lagerhaltungsaufwand reduziert wird.

Zwischen dem Grundkörper 2 und dem aus diesem teilweise herausgeführten Kunststoffteil 4 besteht eine Gewindeverbindung, wobei der Grundkörper 2 ein Innengewinde 12 und das Kunststoffteil 4 ein in dieses eingreifendes Außengewinde 14 aufweist. Diese Gewinde sind als Sägezahngewinde ausgebildet, wobei die Zahnflanken, welche einer Endfläche 15 des Grundkörpers 2 zugewandt sind, im wesentlichen parallel zu einer Radialebene 16 liegen. Eine axiale Zugbeanspruchung zwischen Grundkörper 2 und Kunststoffteil 4 oder Längskräfte, welche aus dem innerhalb der Rohrleitung bzw. des Übergangsverbinders vorhandenen Strömungsmedium resultieren, werden mittels des Sägezahngewindes aufgenommen, wobei radiale Kräfte aufgrund der im wesentlichen rechtwinklig zur Längsachse 18 verlaufenden tragenden Gewindeflanken vermieden werden. Die Endfläche 15 des Grundkörpers 2 sowie eine korrespondierende Anlagefläche 20 des Kunststoffteils 4 sind mit einem Radius versehen, so daß bei eventuellen Biegebeanspruchungen eine nachteilige Kerbwirkung vermieden wird. Bei der Montage, also beim Einschrauben des Kunststoffteils 4 in den Grundkörper 2, ist somit ein Anschlag vorhanden. Die Anlagefläche 20 liegt bevorzugt an einem Ringbund 21.

Die Außenfläche dieses Ringbundes 21 weist einen größeren Durchmesser auf als die zylindrische Verbindungsfläche 10 und/oder das Außengewinde 14 des Kunststoffteils 4. Der Ringbund 21 ist im wesentlichen in der Mitte der axialen Gesamterstreckung des Kunststoffteils 4 angeordnet. Der Grundkörper umgibt das Kunststoffteil nur über einen Teil seiner Gesamtlänge, und zwar zweckmäßig im wesentlichen über dessen Hälfte. Axial versetzt und außerhalb des Grundkörpers liegen die Verbindungsflächen 10, 11 für das Kunststoffrohr. Aufgrund des axialen Versatzes einerseits der Verbindungsflächen 10, 11 und andererseits der Gewindeverbindung sowie des Dichtringes wird insgesamt ein vergleichsweise geringer Gesamt-Außendurchmesser des Übergangsverbinders erreicht. Erfindungsgemäß ist der Außendurchmesser des Ringbundes 21 maximal so groß wie der Außendurchmesser des Grundkörpers bzw. dessen Teil, welcher die Gewindeverbindung und den Dichtbereich mit dem Dichtring und der Ringnut umgibt. Im Bereich des Ringbundes 21 weist das Kunststoffteil 4 in radialer Richtung eine vergrößerte Wanddicke auf, wodurch in zweckmäßiger Weise eine Verstärkung und Aussteifung des Kunststoffteils 4 erreicht wird. Dies ist von besonderer Bedeutung im Hinblick auf das sich an den Ringbund 21 anschließende Außengewinde 14, in dessen Bereich gleichfalls die radiale Wandstärke des Kunststoffteils 4 größer ist als in dem vorderen Teil mit den Verbindungsflächen 10 und 11.

Vor der Montage wird auf das Außengewinde 14 des Kunststoffteils 4 Klebstoff 22 aufgetragen, wie es durch strichpunktierte Linien hier angedeutet ist. Dies erfolgt werksseitig und nach der Montage und dem Aushärten des Klebstoffes 22 kann das Kunststoffteil 4 praktisch aus dem Grundkörper 2 nicht mehr herausgelöst werden. Der Übergangsverbinder kann von einem Anwender unter den Bedingungen der Praxis nicht mehr demontiert werden. Zudem ist eine zuverlässige Verdrehsicherung beim Einsatz unter Betriebsbedingungen gewährleistet. Festzuhalten bleibt, daß die Anforderungen an den Klebstoff sehr gering sind, zumal dieser weder Kontakt mit dem Medium der Rohrleitung hat noch durch den Innendruck beansprucht wird und ferner auch keine Anforderung an hygienische Auflagen für Trinkwasser, insbesondere KTW-Empfehlung, zu erfüllen braucht. Der Klebstoff hat ausschließlich die Funktion, das eingeschraubten Kunststoffteil 4 gegen ein Verdrehen bezüglich des Grundkörpers 2 zu sichern.

Da der Dichtring 24 in Druckrichtung vor der Gewindeverbindung angordnet ist, wird vermieden, daß Klebestoff in den Bereich der Dichtflächen oder der Ringnut mit dem Dichtring gelangen kann. Überflüssiger Klebestoff gelangt auch an die Anlagefläche 20 und in einen äußeren Übergangsbereich 23 zwischen der Außenfläche des Ringbundes 21 und der Endfläche 15 des Grundkörpers 2. Im Übergangsbereich 23 sind somit geringe Spuren von Klebstoff außen sichtbar. Wird nun die Gewindeverbindung in unzulässiger Weise gelöst, so sind unmittelbar Risse in dem Klebestoff im Übergangsbereich 23 zu erkennen. Durch besondere Druckprüfungen oder Inspektionen kann dann geprüft werden, ob den Anforderungen auch dann noch entsprochen wird.

Zur Abdichtung ist ein Dichtring 24 direkt zwischen dem Grundkörper 2 und dem Kunststoffteil 4 vorgesehen. Dieser Dichtring 4 ist als hinlänglich bekannter O-Ring ausgebildet und in einer im Inneren des Grundkörpers 2 vorgesehenen Ringnut 26 angeordnet. Der Dichtring 24 liegt an einer insbesondere zylindrischen Dichtfläche 28 im Bereich des inneren Endes des Kunststoffteils 4 an. Von dem mit Medium beaufschlagten Innenraum des Übergangsverbinders gesehen, befindet sich der Dichtring 24 in Druckrichtung vor der Gewindeverbindung mit dem Innengewinde 12 und Außengewinde 14. Auf die genannte Gewindeverbindung und dem dort vorgesehenen Klebstoff 22 kann somit das Medium und/oder dessen Druck nicht einwirken, wodurch eine lange Lebensdauer und hohe Funktionssicherheit der genannten Verbindung gewährleistet wird. Auch nach langer Betriebszeit von vielen Jahrzehnten ist eine Korrosion der Gewindeverbindung, und zwar insbesondere des Innengewindes 12 des metallischen Grundkörpers 2 nicht zu befürchten. Es ist nur ein einziger Dichtring 24 den Gewinden 12, 14 vorgeschaltet, welcher zuverlässig unmittelbar auf dem Grundkörper, und zwar insbesondere in der Ringnut 24, festgelegt ist und eine Berührung der Gewinde 12, 14 mit dem Medium verhindert. Beim Einschrauben des Kunststoffteils 4 ist eine Beschädigung oder gar ein Herauslösen nicht zu befürchten und es ist eine funktionssichere Anlage an der zylindrischen Dichtfläche 28 problemlos erreicht, wobei Montagefehler sicher vermieden werden. Mit minimalem Aufwand wird der erfindungsgemäße Übergangsverbinder werksseitig vorgefertigt und dem Anwender als komplettes, praktisch unlösbares einheitliches Bauteil zur Verfügung gestellt.

Das Kunststoffteil 4 weist im Bereich seiner radial innenliegenden Verbindungsfläche 11 einen ersten Innenradius 27 auf, welcher größer ist als ein zweiter Innenradius 29. Die Radiusdifferenz ist auf die Wanddicke des anzuschließenden Kunststoffrohres abgestimmt, so daß günstige Strömungsverhältnisse gewährleistet werden. Der Übergangsbereich vom größeren Innenradius 27 auf den kleineren Innenradius 29 liegt bevorzugt im Bereich des Ringbundes 21, wodurch mit minimalem Materialaufwand eine hohe Festigkeit auch und gerade in diesem Bereich gewährleistet wird. Schließlich weist der metallische Grundkörper 2 im Bereich des Gewindes 6 radial innen einen Radius 31 auf, welcher im wesentlichen gleich groß ist wie der zweite Radius 29 des Kunststoffteiles 4. Durch diese besondere Ausgestaltung werden im Übergangsbereich zwischen Kunststoff und Metall Kanten, Vorsprünge oder Sicken vermieden, wodurch günstige Voraussetzungen für eine störungsfreie Strömung gegeben sind.

Der Übergang zwischen den Innenflächen vom ersten Innenradius 27 auf den zweiten Innenradius 29 erfolgt innerhalb des Ringbundes 21. Der Ringbund bildet in besonders zweckmäßiger Weise eine Verstärkung der Wanddicken, wobei mit einem insgesamt nur geringen Materialaufwand den Belastungen und Sicherheitsanforderungen entsprochen wird.

Fig. 2 zeigt eine zweite Ausführungsform des Übergangsverbinders, welcher für kleinere Rohrdurchmesser zum Einsatz gelangt und ebenso wie gemäß Fig. 1 im Maßstab 1:1 dargestellt ist. Die Mittel 8 bzw. die Sechskantflächen für ein Werkzeug erstrecken sich hierbei über die gesamte axiale Länge des Grundkörpers 2. Das Innengewinde 7 ist insbesondere als genormtes Gewinde nach DIN 2999 ausgebildet. Im übrigen sind der Grundkörper 2 und das Kunststoffteil 4 entsprechend der ersten Ausführungsform ausgebildet und die diesbezüglichen Erörterungen gelten entsprechend auch für die in Fig. 2 dargestellte Ausführungsform.

Fig. 3 zeigt eine weitere Ausführungsform, deren Grundkörper 2 als eine Wandscheibe ausgebildet ist. Der Grundkörper 2 weist als radiale Ansätze ausgebildete Mittel 30 auf, welche zur Befestigung dieser Wandscheibe an einer Gebäudewand, Vorsatzwand, Montageschiene oder dergleichen dienen. Hierzu weisen diese Mittel 30 Bohrungen 32 für hier nicht weiter dargestellte Schrauben auf. Die Längsachse 18 des Kunststoffteils 4 verläuft im wesentlichen senkrecht zur Achse 34 der Wandscheibe. Entsprechend ist die mit dem Kunststoffteil 4 verbundene Kunststoffleitung rechtwinklig zu der in das Gewinde 6 eingeschraubte Rohrleitung oder Armatur angeordnet. Bei dieser Ausführungsform ist somit der Grundkörper 2 als abgewinkeltes bzw. gebogenes Bauteil ausgebildet, wobei im übrigen das Kunststoffteil 4 sowie dessen Verbindung mit dem Grundkörper 2 incl. Dichtring incl. Gewindeverbindung mit den eingangs erläuterten Ausführungsformen übereinstimmen.

Die insbesondere zylindrische Außen- und Dichtfläche 28 des Kunststoffteils 4 weist einen Durchmesser 36 auf, welcher kleiner ist als der Kerndurchmesser 38 des Außengewindes 14. Hierdurch wird zum einen gewährleistet, daß bei der Fertigung des Außengewindes 14 die Dichtfläche nicht beschädigt wird und zum anderen, daß das Kunststoffteil auch im Bereich des Außengewindes 14 eine hinreichend große Gesamtwandstärke besitzt, um die geforderten Belastungen funktionssicher aufnehmen zu können. Das Kunststoffteil 4 weist an seinem freien aus dem Grundkörper 2 herausragenden Teil die äußere Verbindungsfläche 10 sowie die innere Verbindungsfläche 11 auf. Radial innen ist zwischen der genannten Verbindungsfläche 11 und der gleichfalls zylindrischen Innenfläche 14 ein Querschnittssprung vorhanden. Die erste zylindrische Innenfläche bzw. Verbindungsfläche 11 hat den ersten Innenradius 27, während die zweite Innenfläche 40 den kleineren zweiten Innenradius 29 besitzt. Die beiden bevorzugt zylindrisch ausgebildeten Innenflächen 11 und 40 erstrecken sich in axialer Richtung über die Längen 42 und 43. Die Längen 42 und 43 sind im wesentlichen gleich groß ausgebildet. Entsprechend ist festzuhalten, daß der frei aus dem Grundkörper herausragende Teil des Kunststoffteiles 4, also der Ringbund 21 und die sich anschließende äußere Verbindungsfläche 14 incl. einer Schrägfläche oder Fase am freien Ende im wesentlichen gleich lang ausgebildet ist, wie der vom Grundkörper 2 umschlossene Teil des Kunststoffteiles 4 mit der Dichtfläche 28 und dem Außengewinde 14. Insgesamt ist durch diese Ausbildung und Zuordnung der unterschiedlichen Funktionsbereiche ein Kunststoffteil geschaffen, welches bei geringem Material- und Gewichtsbedarf in besonders zweckmäßiger Weise den Anforderungen der Praxis gerecht wird.

Wie aus den erläuterten Ausführungsbeispielen ersichtlich, ist unabhängig von der jeweiligen Ausgestaltung des metallischen Grundkörpers 2 das Kunststoffteil 4, abgesehen von den differierenden Abmessungen für die jeweiligen Rohrdurchmesser, übereinstimmend ausgebildet. Das Kunststoffteil kann daher für den jeweils benötigten Rohrdurchmesser gefertigt werden, um den jeweiligen Einsatzzweck mit dem entsprechend ausgebildeten metallischen Grundkörper 2 kombiniert zu werden. Der Fertigungs- und Lagerhaltungsaufwand wird hierdurch auf ein Minimum reduziert.

### Bezugszeichen

- 2: Grundkörper
- 4: Kunststoffteil
- 5: Innenraum
- 6: genormtes Gewinde
- 7: Innengewinde
- 8: Mittel für ein Werkzeug
- 10, 11: Verbindungsfläche von 4
- 12: Innengewinde von 2
- 14: Außengewinde von 4
- 15: Endfläche von 2
- 16: Radialebene
- 18: Längsachse
- 20: Anlagefläche
- 21: Ringbund
- 22: Klebstoff
- 23: Übergangsbereich
- 24: Dichtring
- 26: Ringnut in 2
- 27: erster Innenradius von 4
- 28: Dichtfläche von 4
- 29: zweiter Innenradius von 4
- 30: Mittel zur Befestigung
- 31: Radius von 2
- 32: Bohrung in 30
- 34: Achse von 2
- 36: Durchmesser von 28
- 38: Kerndurchmesser von 14
- 40: Innenfläche
- 42, 43: Länge von 11, 40

## Patentansprüche

1. Übergangsverbinder für eine Rohrleitung, enthaltend einen aus Metall bestehenden Grundkörper (2), mit welchem ein Rohrteil, eine Armatur oder dergleichen verbindbar ist, ein mit dem Grundkörper (2) verbundenes Kunststoffteil (4), welches eine Verbindungsfläche (10, 11) für ein Kunststoffrohr aufweist, und ferner enthaltend einen von einem Medium durchströmbaren Innenraum (5), wobei der Grundkörper (2) ein Innengewinde (12) aufweist, in welches das Kunststoffteil (4) mittels eines Außengewindes (14) eingeschraubt ist und wobei der Grundkörper (2) das Kunststoffteil (4) zumindest im Bereich der genannten Gewindeverbindung (12, 14) umgibt,
dadurch gekennzeichnet, daß ein Dichtring (24) in Druckrichtung zwischen dem Innenraum (5) und der Gewindeverbindung (12, 14) angeordnet ist und daß die Verbindungsfläche (10, 11) außerhalb des Grundkörpers (2) und in Richtung der Längsachse (18) axial versetzt zur Gewindeverbindung (12, 14) angeordnet ist.

2. Übergangsverbinder nach Anspruch 1, dadurch gekennzeichnet, daß die Gewindeverbindung (12, 14) mittels Klebstoff (22) gesichert ist, welcher vor dem Einschrauben des Kunststoffteils (4) auf das Innengewinde (12) und/oder das Außengewinde (14) aufgebracht worden ist.

3. Übergangsverbinder nach Anspruch 1, dadurch gekennzeichnet, daß das Innengewinde (12) und das Außengewinde (14) als Sägezahngewinde ausgebildet sind und/oder daß deren Gewindeflanken, welche einer der Verbindungsfläche (10, 11) des Kunststoffteils (4) nächstliegenden Endfläche des Grundkörpers (2) zugewandt sind, zumindest näherungsweise parallel zu einer Radialebene (16) angeordnet sind, welche orthogonal zur Längsachse (18) verläuft.

4. Übergangsverbinder nach einem der Ansprüche 1 bis 3, dadurch gekennzeichnet, daß das Kunststoffteil (4) eine bevorzugt zylindrische äußere Dichtfläche (28) aufweist, an welcher der im Grundkörper (2) angeordnete Dichtring (24) anliegt und/oder daß der Dichtring (24) in einer Ringnut (26) des Grundkörpers (2) angeordnet ist.

5. Übergangsverbinder nach einem der Anprüche 1 bis 4, dadurch gekennzeichnet, daß das Kunststoffteil (4) eine Innenfläche (11) mit einem ersten Innenradius (27) sowie eine zweite Innenfläche (40) mit einem zweiten Innenradius (29) aufweist, welcher kleiner ist als der genannte erste Innenradius (27) und daß die Dichtfläche (28) und das Außengewinde (14) die zweite Innenfläche (40) radial außen umgeben und/oder daß die axialen Längen (42, 43) der Innenflächen (11, 40) im wesentlichen gleich lang gleich ausgebildet sind.

6. Übergangsverbinder nach einem der Ansprüche 1 bis 5, dadurch gekennzeichnet, daß das Kunsttoffteil (4) radial außen einen Ringbund (21) aufweist, dessen Durchmesser größer ist als der Außendurchmesser der aus dem Grundkörper herausragenden Verbindungsfläche (10) und/oder daß der Ringbund (21) im wesentlichen in der Mitte der axialen Längserstreckung des Kunststoffteils (4) angeordnet ist.

7. Übergangsverbinder nach Anspruch 6, dadurch gekennzeichnet, daß das Kunststoffteil (4) eine Anschlagfläche (20) aufweist, welche insbesondere am Ringbund (21) angeordnet ist und an welcher der Grundkörper (2) mit seiner axialen Endfläche (15) anliegt und/oder daß die Anlagefläche (20) in einem Übergangsbereich (23) zwischen dem Außengewinde (14) und dem vorderen frei aus dem Grundkörper (2) herausragenden Teil des Kunststoffteils (4) angeordnet ist.

8. Übergangsverbindung nach Anspruch 6, dadurch gekennzeichnet, daß der Ringbund (21) radial außen in dem Bereich angeordnet ist, in welchem der Übergang von der Innenfläche (11) mit dem ersten größeren Radius (27) auf die zweite Innenfläche (40 mit dem zweiten kleineren Innenradius (29) erfolgt.

9. Übergangsverbinder nach einem der Ansprüche 1 bis 3, dadurch gekennzeichnet, daß der Grundkörper (2) bevorzugt radial außen angeordnete Mittel (8 bzw. 30) für ein Werkzeug bzw. zur Befestigung aufweist.

10. Übergangsverbinder, insbesondere nach einem der Ansprüche 1 bis 4, dadurch gekennzeichnet, daß der Dichtring (24) radial innenliegend, insbesondere in einer zur Längsachse (18) sich öffnenden Ringnut (26) des Grundkörpers (2) angeordnet ist und an einer bevorzugt zylindrischen und/oder radial außen liegenden Dichtfläche (28) des Kunststoffteils (4) anliegt.

11. Übergangsverbinder nach einem der Ansprüche 1 bis 5, dadurch gekennzeichnet, daß der Grundkörper (2), das Kunststoffteil (4) und der Dichtring (24) eine vorgefertigte Baueinheit bilden, wobei mittels des Klebstoffes (22) eine Sicherung gegen unbeabsichtigtes oder unzulässiges Lösen erfolgt und/oder daß der Klebeverbindung mit dem Klebstoff (22) der Dichtring (24) vorgeschaltet ist, welcher die Klebeverbindung vom Innenraum (5) trennt.

## Claims

1. Connection piece for a pipe, comprising a metal body (2) to which a pipe section, a fitting or the like can be connected, a plastic part (4) which is connected to the body (2) and has a surface (10, 11) for joining to a plastic pipe, and further comprising an inner space (5) through which a medium flows, the body (2) having an internal thread (12) into which the plastic part (4) is screwed by means of an external thread (14) and the body (2) surrounding the plastic part (4) at least in the region of the said threaded joint (12, 14), characterised in that a sealing ring (24) is arranged between the inner space (5) and the threaded joint (12, 14) in the direction of compression and that the joining surface (10, 11) is arranged outside the body (2) and axially offset relative to the threaded joint (12, 14) in the direction of the longitudinal axis (18).

2. Connection piece according to claim 1, characterised in that the threaded joint (12, 14) is secured by means of adhesive (22) which is applied to the internal thread (12) and/or to the external thread (14) before the plastic part (4) is screwed in.

3. Connection piece according to claim 1, characterised in that the internal thread (12) and the external thread (14) are in the form of buttress threads and/or that their threaded flanks directed towards an end face of the body (2) situated nearest to the joining surface (10, 11) of the plastic part (4) are arranged at least approximately parallel to a radial plane (16) extending orthogonally to the longitudinal axis (18).

4. Connection piece according to one of claims 1 to 3, characterised in that the plastic part (4) has a preferably cylindrical outer sealing surface (28) against which the sealing ring (24) arranged in the body (2) bears and/or that the sealing ring (24) is arranged in an annular groove (26) in the body (2).

5. Connection piece according to one of claims 1 to 4, characterised in that the plastic part (4) has an inner face (11) with a first internal radius (27) and a second inner face (40) with a second internal radius (29) which is smaller than the said first internal radius (27) and that the sealing surface (28) and the external thread (14) surround the second inner face (40) radially externally and/or that the axial lengths (42, 43) of the inner faces (11, 40) are essentially identical.

6. Connection piece according to one of claims 1 to 5, characterized in that the plastic part (4) is provided radially on the exterior with an annular collar (21) the diameter of which is larger than the external diameter of the joining surface (10) projecting from the body and/or that the annular collar (21) is arranged essentially in the centre of the axial longitudinal extent of the plastic part (4).

7. Connection piece according to claim 6, characterized in that the plastic part (4) has a stop face (20) which is arranged in particular on the annular collar (21) and against which the body (2) bears via its axial end face (15) and/or that the bearing surface (20) is arranged in a transition region (23) between the external thread (14) and the front part of the plastic part (4) projecting freely from the body (2).

8. Connection piece according to claim 6, characterised in that the annular collar (21) is arranged radially on the exterior in the region of the transition from the inner face (11) with the first larger radius (27) to the second inner face (40) with the second smaller internal radius (29).

9. Connection piece according to one of claims 1 to 3, characterised in that the body (2) has means (8 or 30) for a tool or for securing preferably arranged radially on the exterior.

10. Connection piece, in particular according to one of claims 1 to 4, characterised in that the sealing ring (24) is arranged radially on the interior, in particular in an annular groove (26) in the body (2) opening towards the longitudinal axis (18) and bears against a preferably cylindrical and/or radially external sealing surface (28) of the plastic part (4).

11. Connection piece according to one of claims 1 to 5, characterised in that the body (2), the plastic part (4) and the sealing ring (24) form a prefabricated unit, securing against unintentional or inadmissible loosening being effected by means of the adhesive (22) and/or that the bonded joint with the adhesive (22) is arranged upstream of the sealing ring (24) which separates the bonded joint from the inner space (5).

## Revendications

1. Pièce de connexion pour un conduit, comprenant un corps de base (2) constitué de métal, auquel peut être relié un conduit, une garniture ou similaire, une partie (4) en matière synthétique reliée au corps de base (2) et qui présente une surface d'assemblage (10, 11) pour un conduit en matière synthétique, et comprenant de plus un volume intérieur (5) traversé par un milieu en écoulement, le corps de base (2) présentant un filetage intérieur (12) dans lequel la partie (4) en matière synthétique se visse au moyen d'un filetage extérieur (14), et le corps de base (2) entourant la partie (4) en matière synthétique au moins au niveau dudit assemblage vissé (12, 14), ***caractérisée en ce qu***'une bague d'étanchéité (24) est placée, dans la direction de pression, entre le volume intérieur (5) et l'assemblage vissé (12, 14), et ***en ce que*** la surface d'assemblage (10, 11) est placée à l'extérieur du corps de base (2) et en direction de l'axe longitudinal (18) en décalage axial par rapport à l'assemblage vissé (12, 14).

2. Pièce de connexion selon la Revendication 1**, *caractérisée en ce que*** l'assemblage vissé (12, 14) est immobilisé au moyen de colle (22) qui a été appliquée avant le vissage de la partie (4) en matière synthétique sur le filetage intérieur (12) et/ou le filetage extérieur (14).

3. Pièce de connexion selon la Revendication 1, ***caractérisée en ce que*** le filetage intérieur (12) et le filetage extérieur (14) sont conformés en filetage en dents de scie et/ou ***en ce que*** leurs flancs de filets qui sont tournés vers une surface d'extrémité du corps de base (2) la plus proche de la surface d'assemblage (10, 11) de la partie (4) en matière synthétique sont placés au moins approximativement parallèles à un plan radial (16) qui s'étend orthogonalement à l'axe longitudinal (18).

4. Pièce de connexion selon l'une des Revendications 1 à 3, ***caractérisée en ce que*** la partie (4) en matière synthétique présente une surface d'étanchéité extérieure (28) de préférence cylindrique, contre laquelle s'appuie la bague d'étanchéité (24) placée dans le corps de base (2) et/ou ***en ce que*** la bague d'étanchéité (24) est placée dans une rainure annulaire (26) du corps de base (2).

5. Pièce de connexion selon l'une des Revendications 1 à 4, ***caractérisée en ce que*** la partie (4) en matière synthétique présente une surface intérieure (11) avec un premier rayon intérieur (27), ainsi qu'une deuxième surface intérieure (40) avec un deuxième rayon intérieur (29) qui est inférieur audit premier rayon intérieur (27), et ***en ce que*** la surface d'étanchéité (28) et le filetage extérieur (14) entourent à l'extérieur dans le sens radial la deuxième surface intérieure (40), et/ou ***en ce que*** les longueurs axiales (42, 43) des surfaces intérieures (11, 40) sont pour l'essentiel de même longueur.

6. Pièce de connexion selon l'une des Revendications 1 à 5, ***caractérisée en ce que*** la partie (4) en matière synthétique présente à l'extérieur dans le sens radial une collerette annulaire (21) dont le diamètre est supérieur au diamètre extérieur de la surface d'assemblage (10) dépassant du corps de base, et/ou ***en ce que*** la collerette annulaire (21) est placée pour l'essentiel au milieu de la longueur axiale de la partie (4) en matière synthétique.

7. Pièce de connexion selon la Revendication 6, ***caractérisée en ce que*** la partie (4) en matière synthétique présente une surface extérieure (20) qui est placée en particulier sur la collerette annulaire (21) et contre laquelle s'appuie le corps de base (2) avec sa surface d'extrémité axiale (15), et/ou ***en ce que*** la surface d'appui (20) est placée dans une zone de transition (23) entre le filetage extérieur (14) et la portion avant de la partie (4) en matière synthétique qui dépasse librement du corps de base (2).

8. Pièce de connexion selon la Revendication 6, ***caractérisée en ce que*** la collerette annulaire (21) est placée à l'extérieur dans le sens radial dans la zone dans laquelle se fait la transition de la surface intérieure (11) de plus grand premier rayon intérieur (27) à la deuxième surface intérieure (40) de deuxième plus petit rayon intérieur (29).

9. Pièce de connexion selon l'une des Revendications 1 à 3, ***caractérisée en ce que*** le corps de base présente des moyens (8 ou 30) placés de préférence à l'extérieur dans le sens radial pour un outil ou pour la fixation.

10. Pièce de connexion, en particulier selon l'une des Revendications 1 à 4, ***caractérisée en ce que*** la bague d'étanchéité (24) est placée en position intérieure radiale, en particulier dans une rainure annulaire (26) du corps de base (2) s'ouvrant en direction de l'axe longitudinal (18), et s'appuie contre une surface d'étanchéité (28) de la partie (4) en matière synthétique de préférence cylindrique et/ou placée à l'extérieur dans le sens radial.

11. Pièce de connexion selon l'une des Revendications 1 à 5, ***caractérisée en ce que*** le corps de base (2), la partie (4) en matière synthétique et la bague d'étanchéité (24) forment une unité préfabriquée, une immobilisation contre un démontage involontaire ou inadmissible se faisant au moyen de colle (22), et/ou ***en ce que*** l'assemblage collé avec la colle (22) est placé avant la bague d'étanchéité (24), laquelle sépare l'assemblage collé du volume intérieur (5).
